Europäisches Patentamt

European Patent Office

Office européen des brevets

(19)

(11) Veröffentlichungsnummer : **0 210 414**
**B1**

(12) EUROPÄISCHE PATENTSCHRIFT

(45) Veröffentlichungstag der Patentschrift :
07.09.88

(21) Anmeldenummer : 86108377.2

(22) Anmeldetag : 19.06.86

(51) Int. Cl.⁴ : **B 27 B 17/12**

(54) Kettensäge mit einer Tauchkolben-Ölpumpe.

(30) Priorität : 27.07.85 DE 3527024

(43) Veröffentlichungstag der Anmeldung :
04.02.87 Patentblatt 87/06

(45) Bekanntmachung des Hinweises auf die Patenterteilung : 07.09.88 Patentblatt 88/36

(84) Benannte Vertragsstaaten :
DE FR GB

(56) Entgegenhaltungen :
DE-A- 2 541 495
SU-A- 1 140 948

(73) Patentinhaber : ROBERT BOSCH GMBH
Postfach 50
D-7000 Stuttgart 1 (DE)

(72) Erfinder : Wünsch, Steffen, Dipl.-Ing.
Panoramastrasse 43a
D-7038 Holzgerlingen (DE)
Erfinder : Günter, Zilly
Rohrerstrasse 190
D-7022 Leinfelden-Echterdingen (DE)
Erfinder : Schneider, Helmut
Egartstrasse 4
D-7022 Leinfelden-Echterdingen (DE)

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Stand der Technik

Die Erfindung betrifft eine Kettensäge mit einer Tauchkolben-Ölpumpe nach der Gattung des Hauptanspruchs. Kettensägen solcher Art sind bekannt, z. B. durch die DE-OS 25 41 495 (B27B 17/12). Bei diesen Kettensägen ist eine Stirnfläche des Pumpenkolbens abgeschrägt und mittels Federkraft gegen eine Stütze gedrückt. Die Stütze ist radial zum Pumpenkolben verstellbar und kann so als Stellmittel zum Einstellen der Förderleistung der Tauchkolben-Ölpumpe dienen. Dabei ist der Stellweg etwas geringer als der Durchmesser des Pumpenkolbens. Da in der Regel der Durchmesser des Pumpenkolbens relativ klein sein kann, ist auch der Stellweg klein und die Einstellgenauigkeit unbefriedigend. Außerdem kann stets nur die außerhalb der Pumpenkammer befindliche Stirnfläche des Pumpenkolbens abgeschrägt sein. Dadurch liegt der Arbeitsdruck des Kolbens direkt auf der Stütze. Das alles erhöht den Verschleiß der Stütze und der Stirnfläche des Pumpenkolbens. Falls das zu pumpende Öl kalt und dadurch zähflüssig ist, besteht die Gefahr, daß der Druck auf die Stütze so ansteigt, daß sie bricht. Um dem zu begegnen wird für solche Tauchkolben-Ölpumpen eine lösbare, nachgiebige Antriebsverbindung zwischen dem Pumpenkolben und dem diesen treibenden Motor zusätzlich erforderlich.

Vorteile der Erfindung

Die erfindungsgemäße Kettensäge nach den kennzeichnenden Merkmalen des Hauptanspruchs hat demgegenüber den Vorteil, daß die Einstellgenauigkeit erhöht, der Verschleiß herabgesetzt und die Bruchgefahr ohne zusätzliche Mittel ausgeschaltet wird. Durch die Verlagerung der taumelnden Fläche an die der Pumpenkammer zugewandte Stirnseite des mit dem Pumpenkolben fest verbundenen Zahnrades kann der Verstellweg für die Stütze wesentlich vergrößert und der Arbeitsdruck von der Stütze ferngehalten werden. Der Arbeitsdruck wird dann durch die Schraubendruckfeder erzeugt. Deren Spannkraft kann so bemessen werden, daß zu zähes Öl nicht mehr gepumpt wird. Das Zahnrad und mit ihm der Pumpenkolben werden nur gedreht, ohne die beim Normalbetrieb überlagerte Axialbewegung auszuführen. Beim Drehen wird das Öl nach und nach erwärmt und dadurch weniger zäh. Deshalb setzt dann schließlich auch die Ölförderung ein.

Durch die in den Unteransprüchen aufgeführten Maßnahmen sind vorteilhafte Weiterbildungen und Verbesserungen der im Hauptanspruch angegebenen Kettensäge möglich. Besonders die Ausbildung der Stütze als Kugel vermindert den Verschleiß weiter, zumal die die Kugel aufnehmende Ausnehmung auch Schmiermittel aufnehmen kann.

Zeichnung

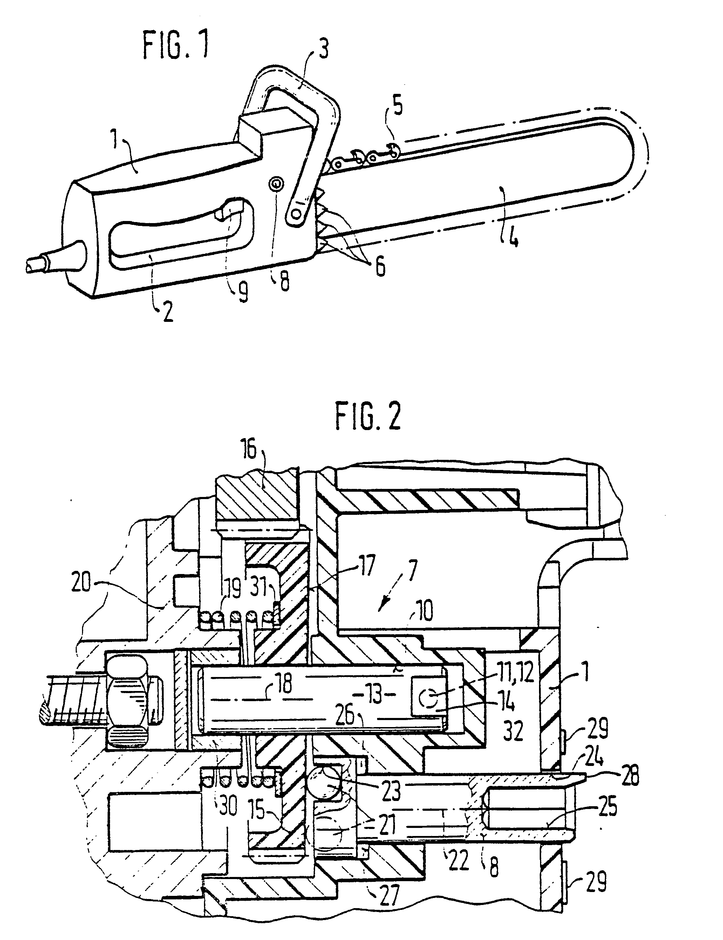

Ein Ausführungsbeispiel des Erfindungsgegenstandes ist in der Zeichnung dargestellt und in der nachfolgenden Beschreibung näher erläutert. Es zeigen Figur 1 eine perspektivische Darstellung einer erfindungsgemäßen Kettensäge und Figur 2 einen Teilschnitt durch das Gehäuse dieser Kettensäge bei der Tauchkolben-Ölpumpe.

Beschreibung des Ausführungsbeispiels

Eine Kettensäge mit einem Gehäuse 1 mit einem Handgriff 2 und mit einem Zusatzhandgriff 3 führt mit einem Schwert 4 eine Sägekette 5. Zähne 6 dienen dem Abstützen der Kettensäge am zu sägenden Werkstück. Im Gehäuse 1 ist eine Tauchkolben-Ölpumpe 7 angeordnet, die mittels eines Bundbolzens 8 in ihrer Förderleistung einstellbar ist. Eine Betätigungshandhabe 9 im Bereich des Handgriffs 2 dient dem normalen Ein- und Ausschalten des Antriebs für die Sägekette 5. Die Tauchkolben-Ölpumpe besteht im wesentlichen aus einer zylindrischen Pumpenkammer 10 mit einer Einlaßöffnung 11 und einer dieser gegenüberliegenden Auslaßöffnung 12 und einem in diese Pumpenkammer 10 eintauchenden Pumpenkolben 13. An seinem inneren Ende hat der Pumpenkolben 13 eine ebene Fläche 14 durch die beim Drehen des Pumpenkolbens 13 nacheinander die Einlaßöffnung 11 und die Auslaßöffnung 12 freigegeben werden. Auf dem Pumpenkolben 13 sitzt fest ein Zahnrad 15. Dieses Zahnrad 15 steht im Zahneingriff mit einem Antriebszahnrad 16, das von einem nicht dargestellten Antriebsmotor angetrieben wird. Die der Pumpenkammer 10 zugewandte Stirnfläche des Zahnrades 15 ist zur Drehachse 18 des Pumpenkolbens 13 schräg angeordnet. Das heißt, daß diese schräge Stirnfläche 17 beim Drehen des Zahnrades 15 und des Pumpenkolbens 13 taumelt. Eine Schraubenfeder 19, die ihr Widerlager an einem Lagerbock 20 findet, sucht das Zahnrad 15 stets mit seiner Stirnfläche 17 an eine Kugel 21 anzulegen. Diese Kugel 21 lagert exzentrisch zur Drehachse 22 des Bundbolzens 8 in einer Ausnehmung 23 in einer Stirnfläche dieses Bundbolzens 8. Die Drehachsen 18 und 22 liegen zueinander parallel. Das durch eine Öffnung 24 im Gehäuse 1 nach außen tretende Ende des Bundbolzens 8 ist mit einem Innensechskant 25 versehen. Ein Nocken 26 am Bund des Bundbolzens 8 ist zum Zusammenwirken mit Rastvertiefungen 27 im Gehäuse 1 bestimmt. Mit diesem Nocken 26 und den Rastvertiefungen 27 sind bevorzugte Drehstellungen des Bundbolzens 8 durch Rast festlegbar. Die verschiedenen Drehstellung des Bundbolzens 8 sind außerdem ablesbar mittels einer Anzeigemarke 28 am äußeren Ende des Bundbolzens 8 und einer dieser Anzeigemarke zugeordneten Anzeigeskala 29 am Gehäuse 1. Außer in der Pumpenkammer 10 lagert der Pumpenkolben 13 noch in einem Lagerring 30 im Lagerbock 20. Die Schraubenfeder 19 ist schließlich über einen Gleitring 31 am Zahnrad 15 abgestützt.

Die beim Drehen des Zahnrades 15 über das Antriebszahnrad 16 erzeugte Taumelbewegung der Stirnfläche 17 bewirkt, infolge des Abstützens dieser Stirnfläche 17 an der Kugel 21, eine Axialbewegung des Pumpenkolbens 13 in der Pumpenkammer 10. Dabei sind die Stellungen der schrägen Stirnfläche 17 und der Fläche 14 aufeinander abgestimmt. Die Abstimmung ist so getroffen, daß sich der ölgefüllte Raum 32 zwischen der inneren Stirnfläche des Pumpenkolbens 13 und der Bodenfläche der Pumpenkammer 10 bei geöffneter Einlaßöffnung 11 vergrößert. Sobald die Einlaßöffnung 11 durch Vorbeigleiten der Fläche 14 vom Zylindermantel des Pumpenkolbens 13 verschlossen und dafür die Auslaßöffnung 12 durch die Fläche 14 freigegeben ist, wird der Pumpenkolben 13 in die Pumpenkammer 10 hineingetrieben. Ein Teil des im Raum 32 befindlichen Öls wird so durch die Auslaßöffnung 12 hinausgepreßt. Über hier nicht näher dargestellte Ölkanäle wird dieses Öl der Sägekette 5 zugeleitet. Je nach dem wieviel Öl gefördert werden soll, wird die Lage der Kugel 21 durch Drehen des Bundbolzens 8 mittels eines in das Innensechskant 25 eingeführten Schlüssels eingestellt. Befindet sich die Kugel 21 in der in Figur 2 stark eingezeichneten Stellung in ihrer innersten Lage so ist der Pumpenhub in Axialrichtung am geringsten. Wird die Kugel 21 durch Drehen des Bundbolzens 8 in ihre äußerste, in Figur 2 strichpunktiert gezeichnete Stellung gebracht, ist der Pumpenhub und damit die Ölförderung am größten. Sofern das Öl, z. B. durch Kälteeinwirkung, sehr zähflüssig geworden sein sollte, vermag die Schraubenfeder 19 den Pumpenkolben 13 nicht über das Zahnrad 15 zum Eintauchen in die Pumpenkammer 10 zu bewegen. Zumindest wird diese Bewegung stark verzögert. Das wirkt sich aber nicht negativ auf die Kugel 21 aus weil diese vom Arbeitsdruck nicht belastet ist. Der Arbeitsdruck wird durch die Schraubenfeder 19 aufgebracht. So dreht sich zunächst der Pumpenkolben 13 nur, ohne eine Pumpbewegung auszuführen. Durch die entstehende Reibungswärme wird das Öl langsam geschmeidiger und der Pumpvorgang kann einsetzen. Mit dieser erfindungsgemäßen Kettensäge mit einer Tauchkolben-Ölpumpe ist eine geringere Reparaturanfälligkeit erreicht.

**Patentansprüche**

1. Kettensäge mit einer Tauchkolben-Ölpumpe (7), die eine zylindrische Pumpenkammer (10) mit einem Einlaßschlitz (11) und einem Auslaßschlitz (12) und einem in diese Pumpenkammer eintauchenden drehbaren Pumpenkolben (13) umfaßt, dessen Drehbewegung eine Axialbewegung überlagert werden kann, die die Pumpwirkung erzielt und bei der eine Dosierung ihrer Förderleistung dadurch erzielt werden kann, daß eine schräge, beim Drehen des Pumpenkörpers taumelnde Fläche (17) am Pumpenkolben in unterschiedlichem Abstand von der Kolbenlängsachse (18) abgestützt werden kann, in dem das Stützmittel (21) in Richtung der Längsachse des Pumpenkolbens starr, quer zu dieser Längsachse aber verstellbar im Gehäuse (1) der Kettensäge gelagert ist, dadurch gekennzeichnet, daß ein fest mit dem Pumpenkolben (13) verbundenes dem Drehantrieb des Pumpenkolbens (13) dienendes Zahnrad (15) eine schräge, beim Drehen taumelnde Stirnfläche (17) hat, die der Pumpenkammer (10) zugewendet ist und deren für das Stützmittel (21) zugänglicher Teil einen Verstellweg des Stützmittels (21) in radialer Richtung zur Achse (18) des Pumpenkolbens (13) zuläßt, der größer ist als der Durchmesser des Pumpenkolbens (13).

2. Kettensäge nach Anspruch 1, dadurch gekennzeichnet, daß der schrägen Stirnfläche (17) des mit dem Pumpenkolben (13) verbundenen Zahnrades (15) als Stützmittel eine Kugel (21) gegenübergestellt ist.

3. Kettensäge nach Anspruch 2, dadurch gekennzeichnet, daß die Kugel (21) in einer Ausnehmung (23) in der Stirnfläche eines Bundbolzens (8) gelagert ist, die exzentrisch zur Drehachse (22) dieses Bundbolzens (8) angeordnet ist und daß diese Drehachse (6) parallel zur Drehachse (18) des Pumpenkolbens (13) liegt und der Bundbolzen (8) vom Bedienenden drehbar im Gehäuse (1) der Kettensäge gelagert ist.

4. Kettensäge nach Anspruch 3, dadurch gekennzeichnet, daß dem Bundbolzen (8) eine Rastvorrichtung (26, 27) zugeordnet ist, die bevorzugte Drehstellungen des Bundbolzens (8) sichert.

5. Kettensäge nach Anspruch 3, dadurch gekennzeichnet, daß der Bundbolzen (8) eine Anzeigemarke (28) und das den Bundbolzen (8) umgebende Gehäuse (1) eine Anzeigeskala (29) tragen oder umgekehrt.

6. Kettensäge nach Anspruch 3, dadurch gekennzeichnet, daß der Bundbolzen (8) ein von außerhalb des Gehäuses (1) zugängliches Innensechskant (25) oder Innenvierkant hat.

7. Kettensäge nach Anspruch 1, dadurch gekennzeichnet, daß das Zahnrad (15) in seiner der schrägen Stirnflächen (17) gegenüberliegenden Stirnfläche eine Ausnehmung hat, in die eine Schraubenfeder (19) eingreifen kann.

**Claims**

1. Chain saw with a plunger oil pump (7), comprising a cylindrical pump chamber (10), having an inlet (11) and an outlet (12), and a rotatable pump plunger (13) which plunges into the pump chamber and on whose rotational movement an axial movement can be superimposed which achieves the pumping action and during which its delivery capacity can be metered owing to the fact that a slanting surface (17) on the pump plunger, which surface (17) wobbles during the rotation of the pump body, can be supported at a varying distance from the plunger longitudinal axis (18) by the supporting means (21) being rigidly mounted in the direction of the longitudinal axis of the pump plunger but adjustably mounted transversely to the longitudinal axis in the housing (1) of the chain saw, characterized in that a gear (15) firmly connected to the pump plunger (13) and used for the rotational drive of the pump plunger (13) has a slanting end face (17) which wobbles during rotation, faces the pump chamber (10) and whose part accessible to the supporting means (21) permits an adjusting travel of the supporting means (21) in the radial direction relative to the axis (18) of the pump plunger (13), which adjusting travel is greater than a diameter of the pump plunger (13).

2. Chain saw according to Claim 1, characterized in that a ball (21), as a supporting means, is set against the slanting end face (17) of the gear (15) connected to the pump plunger (13).

3. Chain saw according to Claim 2, characterized in that the ball (21) is mounted in a recess (23) in the end face of a collar bolt (8) which is arranged ecentrically to the rotational axis (22) of this collar bolt (8), and that this rotational axis (6) [sic] lies parallel to the rotational axis (18) of the pump plunger (13), and the collar bolt (8) is rotatably mounted in the housing (1) of the chain saw by the operator.

4. Chain saw according to Claim 3, characterized in that allocated to the collar bolt (8) is a locking device (26, 27) which secures preferred rotational positions of the collar bolt (8).

5. Chain saw according to Claim 3, characterized in that the collar bolt (8) bears an indicating mark (23) and the housing (1) surrounding the collar bolt (8) bears an indicating scale (29) or vice versa.

6. Chain saw according to Claim 3, characterized in that the collar bolt (8) has an hexagonal socket (25) or a square socket accessible from outside the housing (1).

7. Chain saw according to Claim 1, characterized in that the gear (15), in its end face opposite the slanting end faces (17), has a recess into which a helical spring (19) can engage.

**Revendications**

1. Tronçonneuse à chaîne comportant une pompe à huile à piston plongeur (7) qui comprend une chambre de pompe cylindrique (10) munie d'une fente d'admission (11) et d'une fente d'échappement (12) et un piston de pompe (13) pouvant pénétrer en tournant dans cette chambre (10), dont le mouvement de rotation peut être superposé par un déplacement axial que provoque le déplacement de la pompe et par lequel il peut être ainsi obtenu un débit dosé du fait qu'une face inclinée (17) culbutant lors de la rotation du corps de pompe peut être appuyée avec des intervalles différents sur le piston (3) à partir de l'axe longitudinal du piston (18) du fait que le moyen d'application (21) en direction de l'axe longitudinal du piston (13) est supporté rigidement perpendiculairement, mais de façon réglable, dans le carter (1) de la tronçonneuse à chaîne, caractérisée en ce qu'une roue dentée (15) solidaire du piston de pompe (13) et servant à l'entraînement en rotation de ce dernier possède une surface inclinée culbutant lors de la rotation qui fait face à la chambre de pompe (10) et dont la partie accessible au moyen d'appui (21) permet une course de réglage de ce dernier en direction axiale par rapport à l'axe (18) du piston (13) qui est plus grande que le diamètre du piston de pompe (13).

2. Tronçonneuse à chaîne selon la revendication 1, caractérisée en ce que la surface frontale inclinée (17) de la roue dentée (15) liée au piston de pompe (13) est placée en face d'une bille (21) faisant office de moyen d'appui.

3. Tronçonneuse à chaîne selon la revendication 2, caractérisée en ce que la bille (21) est supportée dans une cavité (23) dans la surface frontale d'un boulon de liaison (8) qui est placée de façon excentrée par rapport à l'axe de rotation (22) de ce boulon (8) et en ce que cet axe de rotation (6) se trouve parallèle à l'axe de rotation (18) du piston de pompe (13) et que le boulon de liaison (8) est supporté de façon rotative à partir de l'extrémité d'utilisation dans le carter (1) de la tronçonneuse.

4. Tronçonneuse à chaîne selon la revendication 3, caractérisée en ce qu'au boulon de liaison (8) est adjoint un système de blocage (26, 27) qui assure avantageusement les positions en rotation de ce boulon (8).

5. Tronçonneuse à chaîne selon la revendication 3, caractérisée en ce que le boulon de liaison (8) et le carter l'entourant portent respectivement un repère (28) et une échelle de repère (29) ou inversement.

6. Tronçonneuse à chaîne selon la revendication 3, caractérisée en ce que le boulon de liaison (8) possède, accessible de l'extérieur du carter (1), un six pans creux (25) ou un carré creux.

7. Tronçonneuse à chaîne selon la revendication 1, caractérisée en ce que la roue dentée (15) présente dans sa surface frontale opposée à la surface frontale inclinée (17) une cavité dans laquelle s'engage un ressort à boudin (9).

## FIG. 1

## FIG. 2